# EUROPÄISCHE PATENTSCHRIFT

(11) **EP 3 119 716 B1**
(45) Veröffentlichungstag und Bekanntmachung des Hinweises auf die Patenterteilung: **10.10.2018**
(21) Anmeldenummer: 15711050.3
(22) Anmeldetag: 19.03.2015
(51) Int. Cl.: B66C 13/16, B66C 15/00, B66D 1/54, G01N 17/00

(54) **VORRICHTUNG ZUR BESTIMMUNG DER ABLEGEREIFE EINES SEILS BEIM EINSATZ AN HEBEZEUGEN**
DEVICE FOR DETERMINING THE REPLACEMENT STATE OF WEAR OF A ROPE DURING USE IN LIFTING GEAR
DISPOSITIF SERVANT À DÉTERMINER LE MOMENT DE DÉPOSE D'UN CÂBLE LORSQU'IL EST UTILISÉ SUR DES ENGINS DE LEVAGE

(30) Priorität: 21.03.2014 DE 202014002552 U
(43) Veröffentlichungstag der Anmeldung: 25.01.2017
(60) Teilanmeldung: 18190753.6
(73) Patentinhaber: Liebherr-Components Biberach GmbH, 88400 Biberach an der Riß (DE)
(72) Erfinder: MUPENDE, llaka, 89231 Neu-Ulm (DE); ZERZA, Horst, 88400 Biberach an der Riß (DE)
(74) Vertreter: Thoma, Michael
(86) Internationale Anmeldenummer: PCT/EP2015/000606
(87) Internationale Veröffentlichungsnummer: WO 2015/139842

(56) Entgegenhaltungen:
- EP-A1- 0 845 672
- WO-A1-2012/100938
- WO-A1-2014/006271
- DE-A1-102011 018 535
- US-A- 4 992 778

## Beschreibung

Die vorliegende Erfindung betrifft allgemein Hebezeuge wie Krane, die Seile wie hochfeste Faserseile verwenden. Die Erfindung betrifft dabei insbesondere eine Vorrichtung zur Bestimmung der Ablegereife eines solchen Seils beim Einsatz an solchen Hebezeugen, mit einer Erfassungseinrichtung zur Erfassung zumindest einer die Ablegereife beinflussenden Seilnutzungskenngröße sowie einer Auswerteeinheit zur Auswertung der Seilnutzungskenngröße sowie Bereitstellung eines Ablegesignals in Abhängigkeit der Seilnutzungskenngrößenauswertung.

In jüngerer Zeit wird an Kranen versucht, anstelle der bewährten und seit vielen Jahren eingesetzten Stahlseile hochfeste Faserseile aus Kunstfasern wie beispielsweise Aramidfasern (HMPA), Aramid-/Kohlefasergemischen, hochmodulare Polyethylen-Fasern (HMPE) oder Poly(p-phenylene-2,6-benzobisoxazole)-Fasern (PBO) zu verwenden. Der Vorteil solcher hochfesten Faserseile liegt in ihrem geringen Gewicht. Bei gleichen Seildurchmessern und gleichen oder höheren Zugfestigkeiten sind solche hochfesten Faserseile deutlich leichter als entsprechende Stahlseile. Insbesondere bei hohen Kranen mit entsprechend großen Seillängen kommt hierdurch eine größere Gewichtsersparnis zustande, die in die Eigenlast des Krans eingeht und zu entsprechend höheren Nutzlasten bei ansonsten unveränderter Bauart des Krans führt.

Eine nachteilige Eigenschaft derartiger hochfester Faserseile ist jedoch ihr Bruchverhalten bzw. ihr Versagen ohne deutliche, längere Vorankündigung. Während sich bei Stahlseilen der Verschleiß deutlich zeigt und ein Versagen über längere Zeit vorher ankündigt, beispielsweise durch den Bruch einzelner Stahldrähte und ein entsprechendes Aufspleißen, das einfach bemerkt wird, zeigen hochfeste Faserseile kaum Anzeichen an übermäßigem Verschleiß, die mit dem Auge einfach wahrnehmbar wären und sich über längere Zeit vor dem eigentlichen Versagen deutlich zeigen würden. Insofern bedarf es intelligenter Überwachungsmaßnahmen, um die Ablegereife von hochfesten Faserseilen rechtzeitig zu erkennen.

Aus der DE 199 56 265 B4 ist eine Vorrichtung zur Überwachung des Betriebs von Hubwinden an Kranen bekannt, die die Seilkraft des Hubseils und den Hebelarm des Hubseils auf die Seilwinde überwacht und hieraus die auf die Seilwinde wirkenden Lastspiele bestimmt, die in einem Lastkollektivzähler abgelegt werden. Dieser Lastkollektivzähler ist in die Hubwinde integriert, um bei Aus- und Wiedereinbau der Hubwinde deren Historie nachvollziehbar zu bewahren. Weiterhin ist aus der EP 0 749 934 A2 ein Lastkollektivzähler bekannt, der die auftretenden Lastwechsel bestimmt, zu jedem Lastwechsel die die Hubwinde beanspruchende Seilkraft bestimmt, hieraus das Lastkollektiv berechnet und unter Einbeziehung der sog. Wöhlerlinien die Restlebensdauer der Hubwinde berechnet und anzeigt.

Derartige Überwachungsmaßnahmen der Hubwinde können jedoch die Restlebensdauer bzw. die Ablegereife eines hochfesten Faserseils nicht wirklich verlässlich angeben, da die hochfesten Faserseile vielerlei Verschleiß beeinflussenden Belastungen und Beeinträchtigungen unterliegen, die unabhängig von der Windenbeanspruchung sind, so z.B. die Umlenk- und Biegebeanspruchungen an Umlenkrollen, externe Stöße und Schläge auf das Seil, Oberflächenverunreinigungen von das Seil berührenden Bauteilen etc. Andererseits sind starre Lebenszeitvorgaben für hochfeste Faserseile hinsichtlich wirtschaftlicher Ausnutzung der tatsächlichen Lebenszeit und Einhaltung der notwendigen Sicherheit kaum miteinander kompatibel, da in Abhängigkeit der Einsatzbedingungen und der äußeren Einwirkungen auf das hochfeste Faserseil dessen Lebensdauer und Verschleiß stark schwanken kann.

Aus der WO 2012/100938 A1 ist es ferner bekannt, mehrere Seilkenngrößen eines hochfesten Faserseils zu überwachen, die bei Annäherung an die Ablegereife charakteristische Veränderungen zeigen. Selbst wenn eine Seilkenngröße keine oder keine signifikante bzw. keine ausreichend starke Änderung zeigen sollte, kann durch Überwachung weiterer Seilkenngrößen die Ablegereife erkannt werden, insbesondere wenn mehrere Kenngrößen Veränderungen zeigen.Dabei umfaßt die Erfassungseinrichtung der Vorrichtung zur Erkennung der Ablegereife mehrere, verschieden ausgebildete Erfassungsmittel zur magnetischen, mechanischen, optischen und elektronischen Erfassung mehrerer verschiedener Seilkenngrößen, die von der Auswerteeinheit einzeln und/oder in Kombination miteinander zur Erkennung der Ablegereife auswertbar sind. Trotz Auswertung mehrerer Seilkenngrößen bleibt jedoch das Problem, daß die Ablegereife nicht immer bei denselben Seilkenngrößenveränderungen tatsächlich gegeben ist bzw. kein starrer Zusammenhang zwischen einzelnen Seilkenngrößenänderungen und der Ablegereife besteht. Je nach Einzelfall kann beispielsweise einer Querdrucksteifigkeitsänderung oder einer Biegewechselspielzahl eine andere Bedeutung für die Ablegereife zukommen. Die DE 10 2011 018 535 A1 zeigt ferner die Berücksichtigung von Umwelteinflüssen wie Temperatur auf die Seilfestigkeitsprüfung an einem Seilprüfstand, während die WO 2014/006271 A1 sich mit dem Einfluss von Schmiermitteln auf ein Hubseil befasst.

Hiervon ausgehend liegt der vorliegenden Erfindung die Aufgabe zugrunde, eine verbesserte Vorrichtung zur Bestimmung der Ablegereife von hochfesten Faserseilen anzugeben, die Nachteile des Standes der Technik vermeidet und Letzteren in vorteilhafter Weise weiterbildet. Vorzugsweise soll eine verlässliche, präzise Bestimmung der Ablegereife erzielt werden, die die Restlebensdauer des Faserseils wirtschaftlich ausnutzt, ohne die Sicherheit zu gefährden und hierfür mit einfachen, auch unter schweren Einsatzbedingungen für Baumaschinen verlässlich arbeitenden Erfassungseinrichtungen auskommt.

Erfindungsgemäß wird diese Aufgabe durch eine Vorrichtung nach Anspruch 1 gelöst. Bevorzugte Ausgestaltungen der Erfindung sind Gegenstand der abhängigen Ansprüche.

Es wird also nach einem vorteilhaften Aspekt der vorliegenden Erfindung vorgeschlagen, bei der Bestimmung der Ablegereife auch Umwelteinflüsse zu erfassen, denen das Seil ausgesetzt ist, wenn sich das Seil am Kran befindet, wobei hier Kranbetriebszeiten und/oder Stillstandszeiten berücksichtigt werden können. Während man bislang darauf vertraute, die Ablegereife anhand messbarer Seilgrößen wie sich verändernder Verdrillsteifigkeit oder Biegefestigkeit des Seils oder sich optisch zeigender Beschädigungen wie aufspleißender Litzen bestimmen zu können, wurden die Alterung beeinflussende Umwelteinflüsse und Wetterdaten vernachlässigt. Deren Erfassung und Berücksichtigung ermöglicht jedoch eine präzisere Bestimmung der Ablegereife eines Seils, insbesondere wenn es sich dabei um ein hochfestes Faserseil handelt. In Weiterbildung der Erfindung besitzt die Erfassungseinrichtung zumindest ein Erfassungsmittel zum Erfassen von Umwelteinflüssen auf das Seil, die von Auswerteeinrichtung zur Erkennung der Ablegereife auswertbar sind.

Dabei können verschiedene Umwelteinflüsse relevant sein und insofern erfasst werden. Beispielsweise können sich am Seil und/oder der Seiltrommel absetzende Partikel wie Staub, Sand oder Ruß zu einer erhöhten Scheuerbelastung an der Seiloberfläche führen und hierdurch die Ablegereife beschleunigen. In Weiterbildung der Erfindung können die vorgenannten Erfassungsmittel einen Partikelerfasser zum Erfassen der in der Umgebungsluft vorhandenen Schmutzpartikel aufweisen. In Abhängigkeit der über die Zeit erfassten Schmutzpartikelmenge und/oder Schmutzpartikelbeschaffenheit kann die Auswerteeinrichtung dann die Ablegereife des Seils bestimmen.

Dabei kann einerseits aus der schieren Schmutzpartikelmenge auf die Beschleunigung der Ablegereife geschlossen werden, bspw. dergestalt, dass bei höheren Partikelmengen und/oder über längere Zeit auftretenden Partikelmengen die Ablegereife rascher eintritt als bei geringen und/oder nur kurzzeitig auftretenden Partikelmengen. Zusätzlich oder alternativ zur Partikelmenge kann auch die Partikelbeschaffenheit bzw. der Partikeltypus herangezogen werden, um auf die Ablegereife zu schließen, bspw. dergestalt, dass härtere und/oder scharfkantigere und/oder spitzere Partikel die Ablegereife eher herbeiführen als weichere und/oder rundere Partikel. Beispielsweise können Sandkörner das Seil mechanisch stärker beeinträchtigen als Rußpartikel. Auch die Größe der in der Luft erfassten Partikel kann bei der Auswertung berücksichtigt werden, bspw. dergestalt, dass einerseits sehr kleine Partikel, deren Durchmesser bspw. unter einem bestimmten Schwellwert liegt, die Ablegereife stärker beeinträchtigen können als etwas größere Partikel, da die sehr kleinen Partikel in Poren oder Seilzwischenräume eindringen und das Seil von innen her aufreiben können. Andererseits können wiederum sehr große Partikel bspw. im Format großer Sandkörner das Seil oberflächenseitig stärker beeinträchtigen als mittelgroße Körner.

Alternativ oder zusätzlich zu einem solchen Partikelerfasser können die Erfassungsmittel auch einen Chemikaliendetektor umfassen, der bestimmte Chemikalien erfasst, die gasförmig in der Luft vorliegen oder in Form von Fluiden auf das Seil einwirken, bspw. stark saure Feuchtigkeit, deren PH-Wert erfasst werden kann, oder Schwefelverbindungen, die im Bereich von Chemieanlagen auftreten können, oder andere mit dem Seilmaterial reagierende oder darauf einwirkende Chemikalien. Der genannte Chemikaliendetektor kann dabei die Menge und/oder Konzentration der jeweiligen Chemikalie erfassen und/oder den jeweiligen Chemikalientyp bestimmen. In Abhängigkeit der erfassten Konzentration und/oder Menge und/oder Beschaffenheit kann die Auswerteeinrichtung dann die Beeinflussung der Ablegereife abschätzen, was bspw. dadurch erfolgen kann, dass sich die Ablegereife im Vergleich zu einem ohne Chemikalieneinfluss benutzten Seil um eine gewisse Prozentzahl erniedrigt.

In Weiterbildung der Erfindung kann die Erfassungseinrichtung auch einen Schmierstofferfasser zum Erfassen von auf das Seil einwirkenden Schmierstoffen wie Öl und Fett umfassen. Bei Verwendung von Stahlseilen kann eine ausreichende Befettung überwacht bzw. eine fehlende Befettung des Seils berücksichtigt werden, um die Ablegereife früher zu bestimmen. Umgekehrt kann bei hochfesten Faserseilen die Ablegereife auch verkürzt bzw. früher festgestellt werden, wenn mit dem Faserseil chemisch reagierende Schmierstoffe wie bestimmte Öle in Berührung sind bzw. auf dem Seil ermittelt werden.

Weiterhin kann die Erfassungseinrichtung auch Betonit oder andere auf Baustellen befindliche Stoffe wie bspw. Kalkstaub oder Ähnliches erfassen, um in Abhängigkeit der erfassten Menge und/oder Beschaffenheit die Ablegereife abzuschätzen.

Alternativ oder zusätzlich zu den vorgenannten Umwelteinflüssen kann gemäß einem weiteren Aspekt der vorliegenden Erfindung die vorgenannte Erfassungseinrichtung auch eine Wetterstation zum Erfassen von Wetterdaten aufweisen, denen der Kran bzw. das daran vorgesehene Seil ausgesetzt ist und in Abhängigkeit derer die Auswerteeinrichtung die Ablegereife bestimmt. Die genannte Wetterstation kann dabei verschiedene klimatische Situationen, die die Lebensdauer des Seils beeinflussen können, erfassen, bspw. die Temperatur und/oder die UV-Strahlung und/oder die Niederschlagsmenge und/oder das Niederschlagsprofil und/oder die Luftfeuchtigkeit und/oder Wasser und/oder Salzwasser und/oder Schnee und/oder Eis.

Die Auswerteeinrichtung kann derart ausgebildet sein, dass sie eine oder mehrere der vorgenannten Seilnutzungskenngrößen verarbeitet und bei der Bestimmung der Ablegereife berücksichtigt. Beispielsweise kann die Ablegereife früher festgestellt werden, wenn das Seil häufig sehr niedrigen und/oder sehr hohen Temperaturen ausgesetzt ist und/oder bei sehr niedrigen und/oder sehr hohen Temperaturen benutzt wird, das heißt Lasten ausgesetzt und Biegewechseln unterworfen wird. Alternativ oder zusätzlich kann die Ablegereife bspw. früher festgestellt werden, wenn der Kran in sehr strahlungsreichen Umgebungen eingesetzt wird, das heißt das Seil hohen UV-Strahlungen ausgesetzt wird, die hochfeste Faserseile früher spröde werden lassen können. Alternativ oder zusätzlich können hohe Niederschlagsraten und/oder hohe Feuchtigkeit und/oder größere Schnee- und Eismengen zu einer Verkürzung der Lebensdauer herangezogen werden bzw. zu einer früheren Abgabe des Ablegereifesignals herangezogen werden. Alternativ oder zusätzlich kann auch berücksichtigt werden, dass Salzwasser am Seil, bspw. in maritimen Einsatzorten oder auch die Beaufschlagung des Seils mit Wasser, bspw. bei Einsetzen an Hochseeplattformen oder an Flüssen die Lebenszeit verkürzen können.

Die Auswerteeinrichtung kann dabei derart ausgebildet sein, dass sie die genannten Umwelt- und/oder Wettereinflüsse separat für sich berücksichtigt. Alternativ oder zusätzlich können die genannten Umwelt- und/oder Wettereinflüsse aber auch mit anderen Einflussgrößen verknüpft werden und bspw. wirksamkeitssteigernd oder wirksamkeitsvermindernd berücksichtigt werden, bspw. dergestalt, dass sehr niedrige Temperaturen während Stillstandszeiten nicht oder nur gering gewertet werden, während Betriebszeiten des Krans mit sehr niedrigen Temperaturen höher gewichtet werden, da dann das Seil bei sehr niedrigen Temperaturen Biegewechseln unterworfen wird, die das Seil stärker beeinträchtigen als nur kalte Temperaturen bei ruhendem Seil.

Dabei kann vorgesehen sein, sich bei der Bestimmung der Ablegereife nicht auf ein einziges Kriterium zu verlassen, sondern die Problematik der nur schwer erfassbaren Vorankündigungszeichen dadurch zu umgehen, dass verschiedene relevante Kenngrößen des Faserseils bzw. seiner Nutzung überwacht sowie auf Veränderungen hin geprüft werden und die Ablegereife bei einer größeren Veränderung einer einzelnen Kenngröße oder mehreren kleineren Veränderungen mehrerer Kenngrößen bestimmt wird. Vorzugsweise umfaßt die Erfassungseinrichtung zusätzlich oder alternativ zu den vorgenannten Wetter- oder Umwelteinfluss-Bestimmungsmitteln mehrere, verschieden ausgebildete Erfassungsmittel zur magnetischen, mechanischen, optischen und/oder elektronischen Erfassung mehrerer verschiedener Seilkenngrößen, die von der Auswerteeinheit einzeln und/oder in Kombination miteinander zur Erkennung der Ablegereife auswertbar sind. Der Heranziehung verschiedener Seilkenngrößen, wie beispielsweise die vorgenannten Umwelt- und Wetterdaten oder mechanische Seilkenngrößen wie die Querdrucksteifigkeit und Querschnittsveränderung oder alternativ oder zusätzlich hierzu eine Seillängung und magnetische Seileigenschaften oder anderer mechanischer, optischer und/oder elektronischer Seilkenngrößen, für die Bestimmung der Ablegereife liegt die Überlegung zugrunde, dass je nach Belastung und Einwirkungen auf das Faserseil es von Fall zu Fall eine andere Kenngröße sein kann, die den Seilverschleiß anzeigt bzw. die Ablegereife ankündigt, bzw. sich die Ablegereife ggf. auch nicht durch eine tatsächlich größere Veränderung einer nur einzigen Kenngröße, sondern durch kleinere Veränderungen mehrerer Kenngrößen zeigt.

In Weiterbildung der Erfindung ist die genannte Auswerteeinheit derart ausgebildet, dass ein Ablegesignal dann bereitgestellt wird, wenn zumindest eine der erfassten Seilkenngrößen bzw. deren Veränderung einen zugehörigen Grenzwert überschreitet/unterschreitet, sowie dann, wenn eine aus allen erfassten bzw. einer Untergruppe der erfassten Seilkenngrößen abgeleitete, mittelbare Seilkenngröße bzw. deren Veränderung einen zugehörigen Grenzwert überschreitet/unterschreitet.

Zusätzlich zu den genannten Seilnutzungskenngrößen betreffend die Umwelteinflüsse, denen das Seil ausgesetzt ist, und/oder die bei der Nutzung vorliegenden Wetterdaten kann das System insbesondere auch das auf das Seil einwirkende Lastkollektiv und/oder die dabei anfallenden Biegewechsel berücksichtigen. Für die Bestimmung der Ablegereife des Faserseils können dabei als das auf das Seil wirkende Lastkollektiv insbesondere die auf das Seil wirkenden Zugbeanspruchungen und/oder die auf das Seil einwirkenden Biegewechsel herangezogen werden. Hierzu kann ein Lastkollektivzähler vorgesehen sein, der als auf das Faserseil einwirkende Lastkollektiv zumindest die Seilzugbelastung und die Biegewechselanzahl erfasst. Die Ermittlung und Auswertung der genannten Messdaten ist über entsprechende Bestimmungsmittel bzw. Erfassungsmittel oder Sensoren möglich, deren Messdaten in der Auswerteeinrichtung verarbeitet und ausgewertet werden. Insbesondere kann ein Lastsensor die laufende Belastung des Seils über die Betriebszeit des Seils erfassen. Zur Bestimmung der Biegewechsel kann ein Drehwegsensor auf der Trommel der Seilwinde die Seillänge bestimmen, die beansprucht wird. In der Auswerteeinrichtung können die Lastdaten und die Seilweg- bzw. Biegewechseldaten miteinander verknüpft werden, um ein Lastkollektiv zu bestimmen, das mit einem vorbestimmten, zulässigen maximalen Lastkollektiv verglichen werden kann. Wird die Anzahl des maximal zulässigen Lastkollektivs erreicht, kann die Auswerteeinheit ein entsprechendes Ablegesignal ausgeben.

Bei der rechnerischen Bestimmung der auf das Seil wirkenden Lastkollektive kann grundsätzlich auf verschiedene analytische Ansätze zurückgegriffen werden. Hierbei kann von der Überlegung ausgegangen werden, aufgrund einer rechnerischen Akkumulation von Schädigungen bei verschiedenen Lastkollektiven auf unterschiedliche Schädigungsgrade zu schließen und diese im Steuerungssystem zu hinterlegen. Hierdurch kann bei einer bestimmten Vorgabe an Lastwechseln rechnerisch auf die hierdurch entstehenden Seilschädigungen geschlossen werden, wobei ein Grenzwert festgelegt werden kann, welcher eine Einschätzung der Ablegereife zulässt.

Beispielsweise kann bei der Auswertung der auftretenden Lastkollektive ein Zählverfahren eingesetzt werden, wobei beispielsweise die Amplitude der auftretenden Lasten über deren Summenhäufigkeit dargestellt werden kann. Da im Normalfall das Faserseil nicht nur einer immer wiederkehrenden, gleichen Belastung mit konstanter Amplitude, sondern einer in ihrer Höhe veränderlichen Belastung unterliegt, kann das sich in der Praxis ergebende Belastungskollektiv beispielsweise in einzelne Rechteckkollektive mit jeweils konstanter Belastung und einer Teilbelastungsspielzahl unterteilt bzw. getreppt werden. Beispielsweise nach dem an sich bekannten Verfahren der linearen Schadenakkumulation kann hierbei nun für jedes Teilkollektiv eine Teilschädigung berechnet werden, indem die Teilbelastungsspielzahl durch die maximal ertragbare Belastungsspielzahl geteilt wird. Die sich so ergebenden Teilschädigungen aller Teilkollektive können aufsummiert und als Angabe der Gesamtschädigung des Faserseils verwendet werden. In an sich ebenfalls bekannter Weise kann dieser Ansatz der linearen Schadensakkumulation auch in verschiedener Weise modifiziert werden, beispielsweise dahingehend, dass Teilkollektive, deren Lastamplituden unterhalb der Dauerfestigkeitsgrenze liegen nicht oder nur begrenzt berücksichtigt werden.

In Weiterbildung der Erfindung kann die vorgenannte Auswerteeinheit für die Berücksichtigung mehrerer Kenngrößen derart ausgebildet sein, dass nicht nur mehrere Seilkenngrößen per se erfasst und auf jeweilige Veränderungen untersucht bzw. mit Grenzwerten verglichen werden, sondern auch Abhängigkeiten zwischen den mehreren Seilkenngrößen berücksichtigt werden. Beispielsweise können zulässige Veränderungen und/oder zulässige Grenzwerte für eine Seilkenngröße verschoben bzw. verändert werden, wenn eine andere Seilkenngröße eine vorbestimmte Veränderung erfahren hat. Hierdurch können insbesondere komplexere Ermüdungen bzw. Schädigungen erfasst und die Ablegereife erkannt werden. Geht man beispielsweise davon aus, dass ein Anstieg der Querdrucksteifigkeit mit einer Abnahme des Seildurchmessers einhergeht, kann bei Erfassung einer angestiegenen Querdrucksteifigkeit von der Auswerteeinheit der Grenzwert für den Seildurchmesser abgesenkt und/oder der Sollbereich für den zulässigen Seildurchmesser verkleinert werden. Stellt dann die Messung fest, dass der Seildurchmesser den abgesenkten Seildurchmessergrenzwert unterschreitet und/oder aus dem verkleinerten Sollbereich herausfällt, kann ein Ablegesignal abgegeben werden. In ähnlicher Weise können alternativ oder zusätzlich hierzu weitere Abhängigkeiten zwischen den verschiedenen Seilkenngrößen von der Auswerteeinheit berücksichtigt werden, beispielsweise die vorgenannte Abhängigkeit zwischen Seilsteifigkeit und Seillängung, beispielsweise dergestalt, dass bei einer höheren Biegesteifigkeit eine zunehmende Seillänge erwartet und durch entsprechende Grenzwerte berücksichtigt wird.

Alternativ oder zusätzlich können auch zeitliche Abhängigkeiten verschiedener Seilbenutzungskenngrößen miteinander verknüpft werden und bei der Auswertung berücksichtigt werden, bspw. dergestalt, dass Teile des Lastkollektivs, die bei ungünstigen Bedingungen entstanden sind, bspw. bei sehr niedrigen oder sehr hohen Temperaturen und/oder bei starker Partikelbelastung wie bspw. Sandeinfluss stärker berücksichtigt werden als bei für das Seil günstigen Bedingungen auftretende Lastkollektive. Die Auswerteeinrichtung kann hierzu eine Gewichtungseinrichtung besitzen, die eine Seilbenutzungskenngröße stärker gewichtet, wenn diese bei ungünstigen Bedingungen auftritt und weniger stark gewichtet, wenn diese bei günstigen Bedingungen beziehungsweise einer günstigen anderen Seilkenngröße auftritt. Die stärkere Gewichtung kann dann von der Auswerteeinrichtung dahingehend berücksichtigt werden, dass diese Ablegereife früher bestimmt wird.

In Weiterbildung der Erfindung können zusätzlich zu Umwelt- und Wetterkenngrößen verschiedene andere Seilkenngrößen herangezogen werden. Gemäß einem weiteren Aspekt der vorliegenden Erfindung wird vorgeschlagen, eine Veränderung der Querdrucksteifigkeit bzw. des Seilquerschnitts zu überwachen und als Indikator für die Ablegereife zu nutzen. Insbesondere kann die Erfassungseinrichtung zur Erfassung von Seilveränderungen Querdrucksteifigkeits- und/oder Querschnitts-Bestimmungsmittel zur Bestimmung der Querdrucksteifigkeit bzw. des Seilquerschnitts aufweisen, wobei die Auswerteeinheit die Querdrucksteifigkeit bzw. den bestimmten Seilquerschnitt auf Veränderungen hin überwacht und ggf. ein Ablegesignal bereitstellt.

Bei Dauerversuchen von hochfesten Faserseilen kann gezeigt werden, dass mit steigender Belastung und Biegewechselzahl die Querdrucksteifigkeit sich in charakteristischer Weise verändert, insbesondere eine Zunahme zeigt. Das Maß der sich verändernden Querdrucksteifigkeit kann daher in vorteilhafter Weise zur Festlegung des Zeitpunktes der Ablegereife mit herangezogen werden. Dabei kann ein Anstieg der Querdrucksteifigkeit mit einer Abnahme des Seildurchmessers einhergehen. Das Seil kann eine höhere Biegesteifigkeit erhalten und/oder es kann eine bleibende, messbare Seillängung eintreten. Insbesondere kann eine Abhängigkeit der Veränderung der Querdrucksteifigkeit zur Veränderung des Seildurchmessers erfasst werden, wobei insbesondere eine Zunahme der Querdrucksteifigkeit in Abhängigkeit zum kleiner werdenden Seildurchmesser erfasst werden kann. Alternativ oder zusätzlich kann eine Abhängigkeit der Veränderung der Seilsteifigkeit von der Veränderung der Seillänge bestimmt werden, wobei insbesondere eine Zunahme der Seilsteifigkeit in Abhängigkeit einer Zunahme der Seillänge bestimmt werden kann. Die Ausgabe des Ablegesignals kann dabei grundsätzlich alleine in Abhängigkeit der überwachten Querdrucksteifigkeit bzw. des Seilquerschnitts erfolgen. Durch die Berücksichtigung der Abhängigkeiten der verschiedenen Seilkenngrößen voneinander kann allerdings vorteilhafterweise eine präzisere Bestimmung der Ablegereife erfolgen.

In Weiterbildung der Erfindung können alternativ oder zusätzlich zu der genannten Querdrucksteifigkeit bzw. Querschnittsfläche oder -form verschiedene andere Seilkenngrößen herangezogen werden Nach einem weiteren Aspekt der vorliegenden Erfindung wird hierbei in vorteilhafter Weise eine Veränderung eines in das Faserseil eingebetteten Indikatorprofils, das aus einem anderen Material als die Seilfasern besteht, überwacht. Mittels eines derartigen Indikatorprofils, das im Kern der Litze eingebettet oder auch zwischen den Fasersträngen des Faserseils angeordnet sein kann, kann die nur schwer erfassbare Veränderung der Fasern bzw. Faserstränge des Faserseils selbst umgangen werden, insbesondere wenn das Indikatorprofil hinsichtlich seiner Ausbildung und/oder hinsichtlich seines Materials so gewählt wird, dass das Indikatorprofil schneller als die Faserstränge des Faserseils Veränderungen zeigt und/oder solche Veränderungen leichter erfassbar sind. Die Überwachung eines solchen Indikatorprofils im Faserseil kann hierbei auch nur für sich ohne Überwachung weiterer Kenngrößen besondere Vorteile mit sich bringen.

In Weiterbildung der Erfindung überwacht die Erfassungseinrichtung, in welchem Seilabschnitt eine Veränderung des Seils, die zur Bestimmung der Ablegereife herangezogen wird, auftritt, um den verschlissenen bzw. schadhaften Seilabschnitt identifizieren und ggf. das restliche Seil noch weiter benutzen zu können, beispielsweise indem der schadhafte Teil abgetrennt wird. In Weiterbildung der Erfindung können den vorgenannten Erfassungsmitteln Seilweg- und/oder - positionserfassungsmittel zugeordnet sein, die den zurückgelegten Seilweg bzw. die Position des auf Veränderungen hin überwachten Seilabschnitts bestimmen. Insbesondere können die genannten Seilweg- bzw. -positionserfassungsmittel eine Seilwindenstellung oder -position erfassen, die gegeben ist, wenn der auf Veränderungen hin zu untersuchende Seilabschnitt gerade im Bereich der entsprechenden Erfassungseinrichtung ist und auf Veränderungen hin tatsächlich überwacht wird. Aus der genannten Seilwindenstellung kann dann in der Auswerteeinrichtung rückgerechnet werden, welcher Seilabschnitt schadhaft bzw. verschlissen ist.

Nach einem weiteren vorteilhaften Aspekt der vorliegenden Erfindung kann alternativ oder zusätzlich zu der genannten Überwachung eines eingebetteten Indikatorprofils auch eine Längung des Faserseils überwacht und zur Bestimmung der Ablegereife herangezogen werden. Die Überwachung der Längung des Faserseils geht von der Überlegung aus, dass ein zunehmender Verschleiß bzw. Schaden am Faserseil bzw. die Annäherung an die Ablegereife mit einer Längung des Faserseils gegenüber dessen Ursprungszustand einhergeht, so dass die Überwachung der Längung des Faserseils als Indikator für die Ablegereife genutzt werden kann. Die Erfassungseinrichtung kann hierzu Bestimmungsmittel zur Bestimmung der Längung des Faserseils aufweisen, wobei die Auswerteeinheit die bestimmte Längung mit einer zulässigen maximalen Längung abgleicht. Sobald die Längung ein vorbestimmtes Maß überschreitet, kann die Ablegereife angezeigt werden.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Darstellung eines erfindungsgemäßen Hebezeugs in Form einer Turmdrehkrans nach einer vorteilhaften Ausführung der Erfindung, dessen Hubseil und/oder dessen Abspannseile für den wippbaren Ausleger als Faserseile ausgebildet sein können,
- Fig. 2:: eine schematische Darstellung eines Fahrzeug-Teleskpkrans, dessen Hubseil auf seine Ablegereife überwacht wird
- Fig. 3:: eine schematische Darstellung eines Hafenkrans, dessen Seile auf Ablegereife überwacht werden, und
- Fig. 4:: eine schematische Darstellung der Vorrichtung zur Erkennung der Ablegereife des Seils eines der Hebezeuge aus den vorhergehenden Figuren, wobei die Auswerteeinheit und die von dieser berücksichtigten Seilnutzungskenngrößen dargestellt sind.

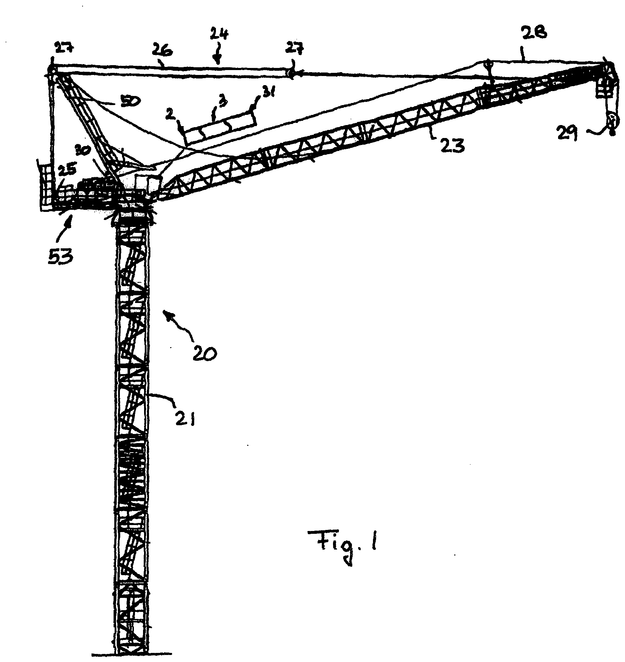

Fig. 1 zeigt beispielhaft für ein Hebezeug nach einer Ausführung der Erfindung einen Kran in Form eines oben drehenden Turmdrehkrans 20, dessen Turm 21 auf einem Wagen oder einer feststehenden Basis gelagert ist. An dem Turm 21 ist in an sich bekannter Weise ein Ausleger 23 um eine liegende Achse wippbar angelenkt und über eine Abspannverseilung 24 abgespannt. Die genannte Abspannverseilung 24 ist über eine Abspannseilwinde 25 in ihrer Länge veränderbar, so dass der Ausleger 23 in seinem Anstellwinkel verändert werden kann. Hierzu läuft ein Abspannseil 26 auf die genannte Abspannseilwinde 25 auf. Über Umlenkrollen 27 beispielsweise an der gezeigten Abspannstrebe 50 oder einer Turmspitze wird das Abspannseil 26, bzw. die Abspannverseilung 24 an einen Anlenkpunkt am Ausleger 23 in der Nähe der Spitze des Auslegers 23 geführt.

Alternativ kann der Turmdrehkran 20 natürlich auch mit einem Laufkatzenausleger versehen sein. An dem Ausleger 23 kann dabei eine Laufkatze verfahrbar gelagert sein, die beispielsweise mittels eines Laufkatzenseils verfahren werden kann, das über Umlenkrollen an der Auslegerspitze geführt sein kann.

Ferner umfasst der Turmdrehkran ein Hubseil 28, das in der gezeichneten Ausführung nach Fig. 1 über Umlenkrollen an der Auslegerspitze von der Spitze des Auslegers herabgelassen werden kann und dort mit einem Kranhaken 29 verbunden ist, oder über die besagte verfahrbare Laufkatze und dort vorgesehene Umlenkrollen ablaufen und mit dem Kranhaken 29 verbunden sein kann. Das genannte Hubseil 28 läuft in beiden Fällen auf eine Hubwinde 30 auf, die wie die Abspannseilwinde 25 der Ausführung nach Fig. 1 im Bereich des Ballastrahmens oder einem anderen Trägerteil am Gegenausleger 53 angeordnet ist.

Das genannte Hubseil 28 und/oder das Abspannseil 26 können hierbei als Faserseil ausgebildet sein, das aus Kunstfasern wie beispielsweise Aramidfasern oder einem Aramid-/Kohlefasergemisch bestehen kann, oder auch als Stahllitzenteil oder als Mischform herausgebildet sein.

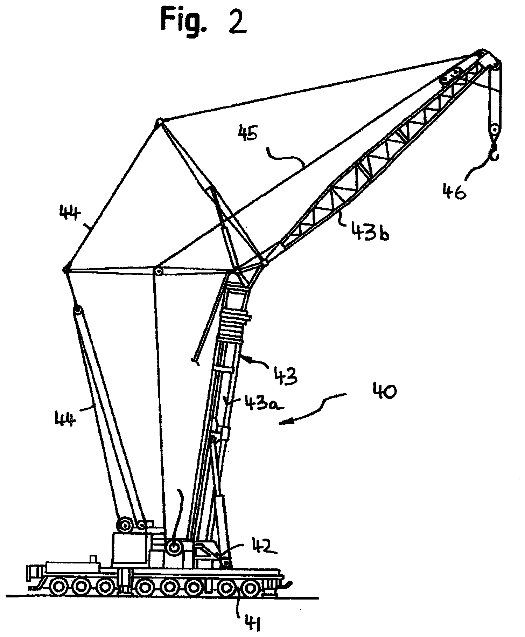

Wie Fig. 2 zeigt, kann das Hebezeug auch als Mobilkran oder Fahrzeugkran 40 ausgebildet sein, der einen als Lkw ausgebildeten Unterwagen 41 umfassen kann, auf den eine Drehbühne 42 um eine aufrechte Achse drehbar gelagert sein kann. An der genannten Drehbühne 42 kann ein Kranausleger 43 angeordnet sein, der mit der genannten Drehbühne 42 um die aufrechte Achse drehbar ist und um eine liegende Wippachse auf- und niederwippbar ist. Wie Fig. 2 zeigt, kann der genannte Kranausleger 43 einen Teleskopausleger 43a umfassen, der ein- und austeleskopierbar ist, wobei an dem genannten Teleskopausleger 43a eine Wippspitze 43b angebracht sein kann, die bspw. als Gitterausleger ausgebildet sein kann. Mittels einer Abspannverseilung 44 kann der genannte Kranausleger 43 abgespannt und ggfs. auch die Wippspitze 43b auf- und niedergewippt werden. Ein Hubseil 45 kann über die Wippspitze 43b ablaufen und in an sich bekannter Weise an einem Kranhaken 46 eingeschert sein.

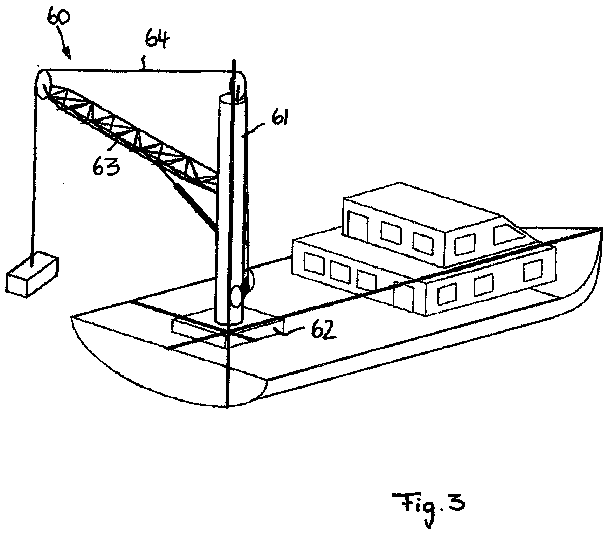

Wie Fig. 3 zeigt, kann das Hebezeug auch als Schiffskran 60 oder Hafenkran ausgebildet sein, der einen Portalpfosten 61 umfasst, der sich im Wesentlichen aufrecht erstreckt und an einer Verankerungsbasis 62 um eine aufrechte Achse drehbar verankert ist. An dem genannten Portalpfosten 61 kann ein Kranausleger 63 wippbar angelenkt sein, über dessen Spitze ein Hubseil 64 abläuft.

Die genannten Abspann- und Hubseile 44 und 45 bzw. 64 der Krane aus den Figuren 2 und 3 können ebenfalls als hochfestes Faserseil in der genannten Weise ausgebildet sein, ggfs. aber auch ein Stahlseil sein.

Im Nachfolgenden wird nur noch von einem Seil 1 gesprochen, wobei hiermit jedes der vorgenannten Abspann- oder Hubseile gemeint sein kann.

Um für die Ablegereife relevante Kenngrößen des genannten Faserseils überwachen bzw. erfassen zu können, ist eine Erfassungseinrichtung 2 vorgesehen, die am Kran angeordnet sein kann und zusammen mit einer Auswerteeinrichtung 3, die die erfassten Kenngrößen auswertet, mit der elektronischen Kransteuereinheit 31 verbunden oder in diese integriert sein kann.

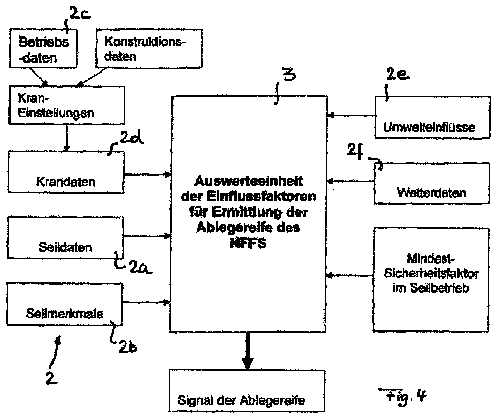

Die Erfassungseinrichtung 2 umfasst dabei, wie Fig. 4 zeigt, diverse Erfassungsmittel, um einerseits das Seil 1 selbst zu überwachen und der Auswerteeinheit 3 Seildaten und Seilmerkmale zur Verfügung zu stellen. Die Erfassungsmittel 2a können insbesondere mechanische Kenngrößen des Seils 1 bereitstellen, bspw. Machart und Material des Seils, Mindestseilzug bei leerem Lasthaken, maximal zulässigen Seilzug und Mindestbruchkraft des Seiles. Weiterhin können die genannten Erfassungsmittel 2a die Quersteifigkeit des Seiles und/oder die Biegesteifigkeit des Seiles und/oder die Drehsteifigkeit des Seiles bereitstellen, wobei hier einerseits die Werte der genannten Größe im Neuzustand des Seiles als abgespeicherte Werte bereitgestellt werden können und eine laufende Überwachung stattfinden kann. Die genannten Seilkenndaten wie Quersteifigkeit, Biegesteifigkeit und Drehsteifigkeit können durch Mess- und/oder Erfassungsmittel überwacht und bestimmt werden, wie dies bspw. in der Schrift WO 2012/100 938 erläutert ist.

Die Erfassungsmittel 2b zur Bereitstellung der in Fig. 4 gezeigten Seilmerkmale können bspw. optische Schadensmerkmale bereitstellen, die bspw. durch eine Kamera erfassbar sind, und/oder betriebsbedingte Merkmale, die durch Datenerfassung am Kran bestimmbar sind, bereitstellen. Insbesondere können die genannten Erfassungsmittel 2b mechanische Beschädigungen bspw. in Form von Schleifspuren am Seilmantel in Signalform bereitstellen, oder auch ähnliche Beschädigungen, bspw. wenn der Seilmantel aufgerissen ist und/oder sich vom Seil löst. Alternativ oder zusätzlich können Schnittstellen und/oder Quetschungen des Seils oder ähnliche schadhafte Stellen des Seilmantels und/oder der Seillitzen durch äußeren Einfluss angezeigt und bereitgestellt werden. Alternativ oder zusätzlich kann eine Buckelbildung erfasst und signaltechnisch bereitgestellt werden, bspw. durch eine starke Verschiebung der Seillitzen. Alternativ oder zusätzlich können auch eine starke Verdrehung des Seilmantels und/oder Verdrehungen pro Längeneinheit bestimmt und bereitgestellt werden.

Je nach Grad der Schadhaftigkeit hinsichtlich der genannten Merkmale kann die Auswerteeinheit 3 ein Ablegereifesignal bereitstellen.

Die Erfassungsmittel 2b können weiterhin betriebsbedingte Merkmale durch entsprechende Messeinrichtungen am Kran bestimmen und der Auswerteeinrichtung bereitstellen, so bspw. Veränderungen des Seildurchmessers und/oder eine Seildehnung. Ferner kann ein Seilwirkungsgrad bestimmt werden, das heißt Veränderungen durch die Alterung und die Betriebsdauer. Alternativ oder zusätzlich kann die Seiltemperatur erfasst werden, die bedingt durch den Kranbetrieb und die Umgebungstemperatur während des Kranbetriebs auftritt. Wird bspw. eine maximal zulässige Seiltemperatur überschritten, kann zur Einhaltung der Seilsicherheit eine Umschaltung auf angepassten Teillastbetrieb erfolgen. Alternativ oder zusätzlich kann auch die Alterung des Seils insbesondere in Form einer erreichten Aufliegezeit bestimmt werden, wobei eine maximal zulässige Aufliegezeit in Abhängigkeit verschiedener Einflussfaktoren bewertet werden kann.

Ferner könne, wie Fig. 4 zeigt, der Auswerteeinrichtung 3 diverse Krandaten zugeführt werden, so bspw. Konstruktionsdaten und Kraneinstellungen wie bspw. Durchmesser von Seiltrommeln und Seilrollen, Seillängen und Seildurchmesser, die Anzahl der Einscherungen, Trommelabmessungen in Form von Trommeldurchmesser und Mantellänge, die Anzahl der maximalen Seillagen auf der Trommel und die Anzahl der Windungen, und/oder maximal für das jeweilige Seil vorgesehene Seilgeschwindigkeiten.

Ferner können als Krandaten auch Betriebsdaten bereitgestellt werden, die mittels entsprechender Erfassungsmittel 2c während des Kranbetriebs erfasst werden können, so bspw. der im Betrieb auftretende Lastbereich und die Zeit der Belastung, eine Lastmessung bezogen auf einen Seilstrang, die bspw. durch eine Lastsensor erfolgen kann, und/oder die Hubhöhe bzw. die Seilweglänge je nach Lastzyklus, wobei hier bspw. eine Messung durch einen Umdrehungssensor an der Seiltrommel erfolgen kann. Alternativ oder zusätzlich kann die tatsächlich gefahrene Seilgeschwindigkeit gemessen, bspw. durch einen entsprechenden Drehgeschwindigkeitssensor an der Seiltrommel.

Insbesondere kann die genannte Erfassungseinrichtung 2 auch Erfassungsmittel 2d zur Erfassung des auf das jeweilige Faserseil 1 einwirkenden Lastkollektivs aufweisen, wobei hier vorteilhafterweise zumindest die auf das Seil einwirkende Zuglast und die Anzahl der Biegewechsel, vorteilhafterweise aber auch andere die Dauerfestigkeit beeinflussenden Parameter wie mehrlagige Spulung, Umwelteinflüsse, Temperatur, Querbelastungen und anderes erfasst werden kann.

Zur Ermittlung der genannten Parameter umfassen die genannten Erfassungsmittel 2d entsprechende Sensoren, deren Signale in der genannten Auswerteeinheit 3 erfolgt. Insbesondere kann ein Lastmesssensor die laufende Belastung über die Betriebszeit des Seils erfassen. Vorteilhafterweise kann ferner ein Drehwegsensor auf der jeweiligen Windentrommel die Seillänge messen, die beansprucht wird. In der Summe kann hieraus ein Lastkollektiv beispielsweise in Form einer Wöhlerkurve bestimmt werden, das mit einem vorgegebenen maximalen Lastkollektiv für das Faserseil 1 verglichen werden kann. Wird die Anzahl des maximal zulässigen Lastkollektivs, also eine bestimmte Anzahl von Biegewechseln unter Einfluss einer bestimmten Last und/oder bestimmte Lastspitzen, erreicht, kann eine Warnung und/oder eine Vorgabe, in welcher Zeit der Seilwechsel erfolgen muss, vorgenommen werden.

Ferner besitzt die Erfassungseinrichtung 2 Erfassungsmittel 2e zum Erfassen von Umwelteinflüssen, die auf die am jeweiligen Kran vorgesehenen Seile 1 einwirken. Die genannten Erfassungsmittel 2e können vorteilhafterweise ebenfalls am jeweiligen Kran vorgesehen sein.

Mögliche Umwelteinflüsse, die die Lebensdauer des Seils beeinflussen können und insofern von den Erfassungsmitteln 2e erfasst werden können, sind bspw. Staub, Sand und/oder Ruß, und/oder Schmierstoffe wie Öle, Fette, die mit dem jeweiligen Seil in Kontakt sind oder bspw. in Form von Ölnebel in der Luft erfassbar sind. Alternativ oder zusätzlich zu solchen Ölen und Fetten kann auch Betonit erfasst werden. Alternativ oder zusätzlich können auch andere Chemikalien, die die Lebensdauer des Seils beeinflussen können, erfasst werden. Die vorgenannten Erfassungsmittel 2e können zum Erfassen der vorgenannten Stoffe einen Partikelerfassung zum Erfassen der in der Umgebungsluft vorhandenen Schmutzpartikel, einen Schmierstofferfasser oder geeignete Chemikaliensensoren umfassen, die an geeigneter Stelle am jeweiligen Kran platziert sein können.

Die Einschlussfaktoren der vorgenannten Umwelteinflüsse auf die Ablegereife bzw. die Lebensdauer des Seils können vorab durch Versuche ermittelt werden, sodass die erfassten Umwelteinflüsse und deren Menge, bspw. Staubpartikelmengen und - typen und -größen mit den jeweiligen Einflussfaktor skaliert und in eine entsprechende Verkürzung der Lebensdauer von der Auswerteeinrichtung 3 umgerechnet werden können.

Alternativ oder zusätzlich zu den vorgenannten Umwelteinfluss-Erfassungsmitteln 2e kann die Erfassungseinrichtung 2 ferner auch Wetterdaten-Erfassungsmittel 2f umfassen, mittels derer mögliche klimatische Situationen, die die Lebensdauer des Seils beeinflussen können, erfasst werden können. Die genannten Erfassungsmittel 2f können bspw. in Form einer Wetterstation am jeweiligen Kran oder in unmittelbarer Nähe hierzu angeordnet sein und entsprechende Wetterdaten an die Auswerteeinrichtung 3 bereitstellen, wie dies Fig. 4 zeigt.

Die genannten Erfassungsmittel 2f können hierbei insbesondere die Umgebungstemperatur und/oder die auftretende UV-Strahlung und/oder das Niederschlagsprofil und/oder Feuchtigkeit und/oder Wasser und/oder Salzwasser und/oder Schnee und/oder Eis als Seilnutzungskenngrößen erfassen, wobei vorteilhafterweise bei der Erfassung registriert wird, ob die entsprechenden Wetterdaten während des Kranbetriebs oder während Stillstandszeiten auftreten.

Einflussfaktoren für die jeweiligen Wettergrößen auf die Ablegereife bzw. die Lebensdauer können auch hier mittels Versuchen ermittelt werden, bspw. dahingehen, wie stark sich eine sehr niedrige Temperatur beim Heben von Lasten und entsprechenden Biegewechseln mit Lasten in einem vorgegebenen Gewichtsbereich auf die Lebensdauer des Seils auswirken. Entsprechend ermittelte Einflussfaktoren können zur Skalierung der Wetterdaten herangezogen werden, wobei hier in der genannten Weise zwischen Klimasituationen während des Kranbetriebs und Klimasitutationen während Stillstandszeiten unterschieden werden kann. Die Auswerteeinrichtung kann die auftretenden Klimasituationen mit Hilfe der genannten Einflussfaktoren in entsprechende Lebensdauerverkürzungen bzw. frühzeitiges Auftreten der Ablegereife umrechnen.

Das Signal der Ablegereife kann von der Auswerteeinrichtung 3 vorteilhafterweise in mehreren Stufen abgegeben werden, bspw. an dem Kranmonitor der Kransteuerung angezeigt werden. Beispielsweise kann eine erste Stufe, bspw. in grün, anzeigen, dass noch eine Sicherheit bis zu einem Mindestseilsicherheitsfaktor 2 besteht. In einer zweiten Stufe, bspw. gelb, kann das Vorliegen einer Sicherheit bis zumindest Seilsicherheitsfaktor 1,5 angezeigt werden. In einer dritten Stufe, bspw. in rot, kann angezeigt werden, dass die Sicherheit nur noch bis zum Mindestseilsicherheitsfaktor 1,0 reicht. Letztere Stufe bzw. letzteres Signal der Auswerteeinrichtung 3 kann bspw. dazu verwendet werden, um die für eine noch weitere Betriebszeit maximal zulässige Seilzugkraft auf einen vorbestimmten Wert zu reduzieren, bspw. 50% der an sich bei einem neuen Seil zulässigen Seilzugkraft. Wird in einem solchen verbleibenden Zeitfenster das Seil nicht erneuert, könnte die Lastabsenkung auf nahezu 0 erfolgen.

## Patentansprüche

1. Vorrichtung zur Bestimmung der Ablegereife eines Seils (1) beim Einsatz an Hebezeugen, insbesondere Kranen, mit einer Erfassungseinrichtung (2) zum Erfassen zumindest einer die Ablegereife beeinflussenden Seilnutzungskenngröße sowie einer Auswerteeinrichtung (3) zum Auswerten der Seilnutzungskenngröße sowie Bereitstellen eines Ablegesignals in Abhängigkeit der SeilnutzungskenngrößenAuswertung, **dadurch gekennzeichnet, dass** die Erfassungseinrichtung (2) zumindest ein Erfassungsmittel (2f) zum Erfassen von am Hebezeug vorherrschenden Wetter- und/oder Klimadaten aufweist, die von der Auswerteeinrichtung (3) zum Bestimmen der Ablegereife auswertbar sind.

2. Vorrichtung nach dem vorhergehenden Anspruch, wobei die genannten Erfassungsmittel (2f) einen UV-Strahlungssensor zum Bestimmen der auf das Seil (1) einwirkenden UV-Strahlung aufweist, wobei der genannte UV-Strahlungssensor vorzugsweise ein Strahlungsdosimeter bildet.

3. Vorrichtung nach einem der beiden vorhergehenden Ansprüche, wobei die Erfassungsmittel (2f) einen Niederschlags- und/oder Feuchtigkeitssensor zum Bestimmen eines Niederschlagsprofils und/oder von Feuchtigkeit umfassen.

4. Vorrichtung nach dem vorhergehenden Anspruch, wobei der genannte Feuchtigkeitssensor Salzgehaltsbestimmungsmittel zum Bestimmen des Salzgehalts in der ermittelten Feuchtigkeit aufweist, wobei in Abhängigkeit des Salzgehalts von der Auswerteeinrichtung (3) die Ablegereife bestimmbar ist.

5. Vorrichtung nach einem der vorhergehenden Ansprüche, wobei die Erfassungsmittel (2f) zumindest einen Schnee- und/oder Eissensor zum Erfassen von Schnee und/oder Eis aufweisen, wobei in Abhängigkeit des erfassten Schnees und/oder Eis, insbesondere der erfassten Schnee- und/oder Eismenge und/oder -dauer, von der Auswerteeinrichtung (3) die Ablegereife bestimmbar ist.

6. Vorrichtung nach einem der vorhergehenden Ansprüche, wobei die Erfassungseinrichtung (2) Erfassungsmittel (2e) zum Erfassen von Umweilteinflüssen auf das Seil (1) aufweist, die von der Auswerteeinrichtung (3) zum Bestimmen der Ablegereife auswertbar sind.

7. Vorrichtung nach dem vorhergehenden Anspruch, wobei die Erfassungsmittel (2e) einen Partikelerfasser zum Erfassen der in der Umgebungsluft vorhandenen Schmutzpartikel aufweist und die Ablegereife von der Auswerteeinrichtung (3) in Abhängigkeit der über die Zeit erfassten Schmutzpartikelmenge und/oder - beschaffenheit bestimmbar ist.

8. Vorrichtung nach dem vorhergehenden Anspruch, wobei der Partikelerfasser zum Erfassen und/oder Erkennen von Staub und/oder Sand und/oder Ruß ausgebildet ist.

9. Vorrichtung nach einem der Ansprüche 6 bis 8, wobei die Erfassungsmittel (2e) einen Schmierstofferfasser zum Erfassen von auf das Seil (1) einwirkenden Schmierstoffen, insbesondere Öle und Fette, aufweisen.

10. Vorrichtung nach einem der Ansprüche 6 bis 9, wobei die Erfassungsmittel (2e) einen Betonitsensor zum Erfassen von Betonit aufweisen und die Ablegereife von der Auswerteeinrichtung (3) in Abhängigkeit der über die Zeit erfassten Betonitmenge bestimmbar ist.

11. Vorrichtung nach einem der Ansprüche 6 bis 10, wobei die Erfassungsmittel (2e) zumindest einen Chemikaliensensor zum Erfassen von das Seil (1) beeinträchtigenden Chemikalien aufweist und die Ablegereife von der Auswerteeinrichtung (3) in Abhängigkeit der über die Zeit erfassten Chemikalienmenge und/oder - beschaffenheit bestimmbar ist.

12. Vorrichtung nach einem der vorhergehenden Ansprüche, wobei die Erfassungseinrichtung (2) mehrere, verschieden ausgebildete Erfassungsmittel zum Erfassen mehrerer, verschiedener Seilnutzungskenngrößen umfasst, die von der genannten Auswerteeinrichtung (3) in Kombination miteinander zum Erkennen der Ablegereife auswertbar sind.

13. Vorrichtung nach dem vorhergehenden Anspruch, wobei von der Auswerteeinrichtung (3) zumindest eine Wetterkenngröße in Kombination mit zumindest einer Umwelteinflussgröße zum Erkennen der Ablegereife auswertbar ist.

14. Vorrichtung nach einem der vorhergehenden Ansprüche, wobei die Auswerteeinrichtung (3) ein Ablegesignal dann, wenn zumindest eine der erfassten Seilnutzungskenngrößen oder Veränderungen einen zugehörigen Grenzwert überschreitet/unterschreitet, sowie dann, wenn eine aus allen oder einigen der erfassten Seilnutzungskenngrößen abgeleitete, mittelbare Summenkenngröße oder deren Veränderung einen zugehörigen Grenzwert überschreitet/unterschreitet, abgibt.

## Claims

1. Device for determining the replacement state of wear of a rope (1) in the use of lifting gear, in particular cranes, with a detection device (2) for detecting at least one rope utilization parameter influencing the replacement state of wear as well as with an evaluation device (3) for evaluating the rope utilization parameter and for providing a replacement signal depending on the evaluation of the rope utilization parameter, **characterized in that** the detection device (2) comprises at least one detection means (2f) for detecting meteorological and/or climate data prevailing on the lifting gear, which can be evaluated by the evaluation device (3) to determine the replacement state of wear.

2. Device according to the preceding claim, wherein the mentioned detection means (2f) comprise a UV radiation sensor for determining the UV radiation affecting the rope (1), wherein the mentioned UV radiation sensor preferably forms a radiation dosimeter.

3. Device according to one of the two preceding claims, wherein the detection means (2f) include a rainfall and/or humidity sensor for determining a rainfall profile and/or humidity.

4. Device according to the preceding claim, wherein the mentioned humidity sensor comprises salinity determination means for determining the salinity in the detected humidity, wherein the replacement state of wear can be determined by the evaluation device (3) depending on the salinity content.

5. Device according to one of the preceding claims, wherein the detection means (2f) at least comprise a snow and/or ice sensor for the detection of snow and/or ice, wherein the replacement state of wear can be determined by the evaluation device (3) depending on the detected snow and/or ice, in particular the detected amount and/or duration of snow and/or ice.

6. The device according to one of the preceding claims, wherein the detection device (2) comprises detection means (2e) for detecting environmental impacts on the rope (1), which can be evaluated by the evaluation device (3) in order to determine the replacement state of wear.

7. The device according to the preceding claim, wherein the detection means (2e) comprise a particle detector for detecting the dirt particles present in the ambient air, and the replacement state of wear can be determined by the evaluation device (3) depending on the amount and/or texture of dirt particles detected over time.

8. The device according to the preceding claim, wherein the particle detector is configured to detect and/or identify dust and/or sand and/or soot.

9. The device according to one of claims 6 to 8, wherein the detection means (2e) comprise a lubricant detector for detecting lubricants, in particular oils and fats, affecting the rope (1).

10. The device according to one of claims 6 to 9, wherein the detection means (2e) comprise a bentonite sensor for the detection of bentonite, and the replacement state of wear can be determined by the evaluation device (3) depending on the amount of bentonite detected over time.

11. The device according to one of claims 6 to 10, wherein the detection means (2e) comprise at least one chemical-substance sensor for detecting chemical substances affecting the rope, and the replacement state of wear can determined by the evaluation device (3) depending on the quantity and/or texture of the chemicals detected over time.

12. The device according to one of the preceding claims, wherein the detection device (2) includes multiple detection means of different configuration in order to detect multiple different rope utilization parameters, which can be evaluated by the mentioned evaluation device (3) in combination with one another, in order to recognize the replacement state of wear.

13. The device according to the preceding claim, wherein at least one meteorological parameter in combination with at least one environmental impact parameter can be evaluated by the evaluation device (3) in order to recognize the replacement state of wear.

14. The device according to one of the preceding claims, wherein the evaluation device (3) outputs a replacement signal in the event that at least one of the detected rope utilization parameters or changes exceeds/falls below an associated threshold value, as well as in the event that an indirect total parameter derived from all or some of the detected rope utilization parameters, or change thereof, exceeds/falls below an associated threshold value.

## Revendications

1. Dispositif pour la détermination du taux d'usure d'un câble (1) lors d'une opérations aux engins de levage, notamment des grues, comportant un dispositif de détection (2) pour détecter au moins une grandeur caractéristique de l'utilisation du câble qui influence le taux d'usure, ainsi qu'un dispositif d'évaluation (3) pour évaluer la grandeur caractéristique de l'utilisation du câble et pour fournir un signal d'usure à cette fin, **caractérisé en ce que** le dispositif de détection (2) comprend au moins un moyen de détection (2f) pour détecter des données météorologiques et de climatisation ayant lieu aux engins de levage et qui sont évaluables par le dispositif d'évaluation (3) pour déterminer le taux d'usure du câble.

2. Dispositif selon la revendication précédente, dans lequel lesdits moyens de détection (2f) mentionnés comprennent un capteur de rayonnement UV pour déterminer les rayons UV qui prennent effet sur le câble (1), ledit capteur de rayonnement UV constituant de préférence un dosimètre de rayonnement.

3. Dispositif selon l'une quelconque des deux revendications précédentes, dans lequel les moyens de détection (2f) comprennent un capteur de pluviosité et/ou d'humidité destiné à déterminer l'humidité et/ou un profil de pluviosité.

4. Dispositif selon la revendication précédente, dans lequel ledit capteur d'humidité comprend des moyens de détermination de la teneur en sel pour déterminer la teneur en sel dans l'humidité déterminée, le taux d'usure du câble soit déterminable en fonction de la teneur en sel fournit par le dispositif d'évaluation (3).

5. Dispositif selon l'une quelconque des revendications précédentes, dans lequel lesdits moyens de détection (2f) présentent au moins un capteur de neige et/ou de glace pour capter du neige et/ou du glace, le taux d'usure du câble étant déterminable par le dispositif d'évaluation (3), en fonction du neige détecté et/ou du glace détecté, notamment en fonction de la quantité ou de la durée du neige et/ou du glace.

6. Dispositif selon l'une quelconque des revendications précédentes, dans lequel ledit moyen de détection (2) présente des instruments de détection (2e) pour détecter les influences environnementales sur le câble (1) qui peuvent être évaluées par le dispositif d'évaluation (3) afin de déterminer le taux d'usure de câble.

7. Dispositif selon la revendication précédente, dans lequel lesdits instruments de détection (2e) présentent un détecteur de particules pour détecter les particules de saleté présentes dans l'air ambiant et le taux d'usure du câble est déterminable par le dispositif d'évaluation (3) en fonction de la quantité ou de la texture des particules de saleté détectées en fonction du temps.

8. Dispositif selon la revendication précédente, dans lequel le détecteur de particules est conçu pour détecter et/ou déceler de poussière et/ou du sable et/ou de la suie.

9. Dispositif selon l'une quelconque des revendications 6 à 8, dans lequel les instruments de détection (2e) présentent un détecteur de lubrifiants pour détecter des lubrifiants qui prennent effet sur le câble (1), notamment des huiles et des grasses.

10. Dispositif selon l'une quelconque des revendications 6 à 9, les instruments de détection (2e) présentant un capteur de bentonite pour détecter de la bentonite et le taux d'usure du câble étant déterminable par le dispositif d'évaluation (3) en fonction de la quantité bentonite détectée en fonction du temps.

11. Dispositif selon l'une quelconque des revendications 6 à 8, les instruments de détection (2e) présentant au moins un capteur de produits chimique pour détecter les produits chimiques qui détériorent le câble (1) et le taux d'usure du câble étant déterminable par le dispositif d'évaluation (3) en fonction de la quantité et/ou la qualité de produits chimiques détectée en fonction du temps ou de leur texture.

12. Dispositif selon l'une quelconque des revendications précédentes, l'instrument de détection (2) comprenant plusieurs moyens de détection conçus différemment pour détecter plusieurs différentes grandeurs caractéristiques d'utilisation du câble, qui sont évaluables, l'une combinée avec l'autre, pour reconnaître le taux d'usure du câble, par ledit dispositif d'évaluation (3).

13. Dispositif selon la revendication précédente, dans lequel au moins un paramètre de conditions météo en combinaison avec au moins une grandeur à impact environnemental est évaluable par le dispositif d'évaluation (3) pour reconnaitre le taux d'usure du câble.

14. Dispositif selon l'une des revendications précédentes, dans lequel le dispositif d'évaluation (3) émet un signal d'usure lorsque au moins l'une des caractéristiques d'utilisation du câble détectées ou des changements dépasse ou est inférieure à une valeur limite assignée permissible, ainsi que lorsque un paramètre total, indirecte et dérivé de tous ou de quelques-uns des caractéristiques d'utilisation du câble ou le changement du celui-ci, dépasse un/est inférieure à un valeur limite.
